# EUROPÄISCHE PATENTSCHRIFT

(11) **EP 3 733 031 B1**
(45) Veröffentlichungstag und Bekanntmachung des Hinweises auf die Patenterteilung: **24.11.2021**
(21) Anmeldenummer: 20172273.3
(22) Anmeldetag: 30.04.2020
(51) Int. Cl.: A47J 31/52, A47J 31/40

(54) **VERFAHREN ZUR HERSTELLUNG VON VOLUMENGENAUEN HEISSGETRÄNKEN**
METHOD FOR THE PRODUCTION OF HOT BEVERAGES WITH A PRECISE VOLUME
PROCÉDÉ DE FABRICATION DE BOISSONS CHAUDES D'UN VOLUME PRÉCIS

(30) Priorität: 03.05.2019 DE 102019206400
(43) Veröffentlichungstag der Anmeldung: 04.11.2020
(73) Patentinhaber: BSH Hausgeräte GmbH, 81739 München (DE)
(72) Erfinder: Speckbacher, Benedikt, 83339 Chieming (DE); Nerbl, Christian, 83512 Wasserburg am Inn (DE); Palierakis, Sandro, 83059 Kolbermoor (DE)

(56) Entgegenhaltungen:
- CH-A5- 675 312
- DE-A1-102015 209 990
- US-A1- 2006 292 012
- US-A1- 2007 207 040

## Beschreibung

Die Erfindung betrifft ein Verfahren zur Herstellung von Heißgetränken sowie einen entsprechenden Getränkeautomaten. Die Erfindung dient dabei der Gewährleistung einer hohen Genauigkeit des ausgegebenen Flüssigkeitsvolumens.

Die DE 10 2015 209 990 A1 beschreibt eine Heißgetränkezubereitungsvorrichtung, insbesondere einen Kaffeevollautomaten, mit einer Pumpe, welche einen elektrischen Pumpenmotor aufweist und dazu ausgebildet ist, in der Heißgetränkezubereitungsvorrichtung eine Flüssigkeit zu pumpen, mit einem Sensor, welcher dazu ausgebildet ist, eine Betriebsgröße des elektrischen Pumpenmotors zu messen, welche eine Aussage über den von der Pumpe erzeugten Flüssigkeitsfluss ermöglicht, und mit einer Steuereinrichtung, welche mit dem elektrischen Pumpenmotor und dem Sensor gekoppelt ist und welche dazu ausgebildet ist, den elektrischen Pumpenmotor basierend auf der von dem Sensor erfassten Betriebsgröße zu steuern.

Dokument CH-A-675312 offenbart ein Verfahren zur Herstellung von Heißgetränken mit einem Getränkeautomaten, wobei durch einen Zähler die Zeit der Abgabe der Flüssigkeit bestimmt wird, welche einem gegebenen Volumen entspricht.

Der Erfindung liegt die Aufgabe zugrunde, ein verbessertes Verfahren und einen verbesserten Getränkeautomaten zur Herstellung von Heißgetränken anzugeben, wobei die Genauigkeit der ausgegebenen Flüssigkeitsmenge optimiert wird. Insbesondere soll eine einfache, leicht implementierbare und anpassbare Lösung angegeben werden.

Die Erfindung löst diese Aufgabe mittels der Gegenstände der unabhängigen Ansprüche. Die Unteransprüche geben bevorzugte Ausführungsformen wieder.

Die Erfindung lässt sich besonders vorteilhaft im Bereich der Kaffeevollautomaten einsetzen, da insbesondere dort der Trend anhält, neben der gewünschten Art des Kaffeegetränkes noch Wahlmöglichkeiten für Variationen desselben Kaffeegetränks sowie Kombinationsmöglichkeiten mit anderen Variationen anzubieten, z. B. Getränkegröße, Pulvermenge, Crema, Milchanteil, etc.

In vielen Getränkeautomaten zur Herstellung von Heißgetränken arbeiten Flussmesser, Pumpe, oder entsprechende Module oftmals nicht linear oder werden je nach Arbeitspunkt von Schwingungseffekten oder Druckpulsen im Gesamtsystem unterschiedlich beeinflusst. Dazu kommt, dass der Druckaufbau im Fluidsystem in der Regel zwischen einzelnen Prozessen schwankt. Das Resultat ist ein über die Menge von identischen ausgegebenen Getränken leicht schwankender Füllstand, da die ausgegebene Volumenmenge durch die geschilderten Effekte stets ein wenig variiert. Besonders bei Kaffeevollautomaten können aufgrund der oftmals mannigfaltigen Variationsmöglichkeiten je nach Getränkeanforderung die zu fördernde Mengen und Toleranzen unterschiedlich sein.

Das erfindungsgemäße Verfahren dient zur Herstellung von Heißgetränken mit einem Getränkeautomaten. Der Getränkeautomat ist zur Zubereitung einer Vielzahl unterschiedlicher Heißgetränketypen ausgelegt, beispielsweise ein Kaffeevollautomat. Solche Maschinen, die mit Heizmodulen ausgestattet sind, z. B. mit Durchlauferhitzern, arbeiten oftmals mit einer Volumentabelle, welche die Mengen von auszugebenden Volumina angibt, z.B. die auszugebende Kaffeemenge oder den Milch- zu Kaffeeanteil in einem Kaffeevollautomaten. Für die Volumenberechnung wird die Konfiguration des Flussmessers verwendet. Damit kann jedoch z. B. kein charakteristisches Verhalten vom Druckaufbau angegeben bzw. eine Flussänderung effektiv abgefangen werden.

Unter "Heißgetränketyp" wird ein individueller Getränketypus verstanden, welcher sich von anderen Getränken aufgrund mindestens eines Parameters unterscheidet. Unterschiedsparameter sind nicht nur die Getränkearten Tee, Kaffee, Milch, Kakao, Brühe, etc., sondern auch die Getränkegröße (klein, mittel, groß), die Getränkestärke (z. B. mild, normal, stark, sehr stark) oder andere Parameter, die im Folgenden noch genauer beschrieben werden. Beispielsweise wird ein Cappuccino, der in zwei möglichen Größen ausgegeben werden kann, als zwei Getränketypen aufgefasst.

Das Verfahren umfasst die folgenden Schritte:

### - Bereitstellen von Steuerparameterwerten

Die Steuerparameterwerte umfassen Informationen für Flüssigkeitsvolumina, wobei jeder Steuerparameterwert mit einem Flüssigkeitsvolumen verknüpft ist. Ein Steuerparameterwert umfasst Informationen zur Steuerung einer Fördereinrichtung des Getränkeautomaten, z.B. zur Steuerung einer Pumpe oder zur Öffnung eines Ventils. Die Steuerparameterwerte können die oben bereits genannte Volumentabelle bilden, so dass dieser Schritt auch die Aktion "Bereitstellen einer Volumentabelle" darstellen kann. Beispielsweise kann ein Steuerparameterwert mit dem Flüssigkeitsvolumen 40 ml verknüpft sein und Informationen umfassen, wie eine Pumpe angesteuert werden muss, um 40 ml einer Flüssigkeit zu fördern. Der Begriff "verknüpft" bedeutet eine datentechnische Verknüpfung. Ein Steuerparameterwert, der mit einem Flüssigkeitsvolumen verknüpft ist, gilt für dieses Flüssigkeitsvolumen und umgekehrt.

### - Bereitstellen von Kompensationswerten

Die Kompensationswerte sind zur Änderung von Flüssigkeitsvolumina ausgelegt, wobei jeder Kompensationswert mit einem Heißgetränketyp verknüpft ist. Ein Kompensationswert gilt nicht ausschließlich für ein bestimmtes Flüssigkeitsvolumen, sondern für einen speziellen Heißgetränketyp. Beispielsweise können für einen Cafe Crema und einen Cappuccino bei gleicher Getränkegröße, also bei gleichem Flüssigkeitsvolumen, durchaus unterschiedliche Kompensationswerte existieren, da viele unterschiedliche Parameter z. B. die Menge des verwendeten Kaffeepulvers oder Eigenheiten des Heizelements wie eines Durchlauferhitzers das letztendlich ausgegebene Volumen beeinflussen können. Selbstverständlich ist nicht ausgeschlossen, dass die Kompensationswerte auch gleich sein können.

### - Auswahl eines Heißgetränketyps

Die Auswahl eines Heißgetränketyps trifft ein Benutzer z. B. durch Druck einer Taste am Getränkeautomaten, z. B. der "Espresso"-Taste. Die benutzerseitige Auswahl kann auch mehrstufig erfolgen, z. B. zunächst die Getränkeart, z. B. "Cappuccino", dann die Getränkegröße "mittel" und dann ggf. weitere Parameter wie z. B. "Temperatur". Der so ausgewählte Heißgetränketyp ist mit einem bestimmten Flüssigkeitsvolumen verknüpft. Durch die Verknüpfung des Steuerparameterwertes mit dem Flüssigkeitsvolumen ist mit der erfolgten Auswahl nun der betreffende Steuerparameterwert dem Verfahren bekannt und kann zur Zubereitung angewandt werden.

### - Zubereitung eines Heißgetränks

Bei der Zubereitung eines Heißgetränks des ausgewählten Heißgetränketyps fördert der Getränkeautomat ein Flüssigkeitsvolumen einer Flüssigkeit, regelmäßig Wasser. Das Flüssigkeitsvolumen ergibt sich aus dem Steuerparameterwert für das Flüssigkeitsvolumen, wobei es noch durch den Kompensationswert für den Heißgetränketyp geändert, also korrigiert wird. Dies kann z. B. direkt durch Änderung des betreffenden Steuerparameterwertes erreicht werden, wie im Folgenden genauer beschrieben wird. Durch die Verknüpfung des Kompensationswerts mit dem Getränketypen ist sichergestellt, dass Einflüsse wie z. B. die Art des Getränkepulvers, der Verpressungs- oder Mahlgrad oder der Einfluss des Heizelements berücksichtigt werden können.

Gemäß einem bevorzugten Verfahren wird zur Beförderung des Flüssigkeitsvolumens durch den Getränkeautomaten ein Ausgabesteuerwert berechnet, der sich aus dem Steuerparameterwert und dem Kompensationswert ergibt. Aus beiden Größen ergibt sich also ein Wert, der der Steuerung der Flüssigkeitsausgabe dient. Da in der Regel Pumpen als Fördereinrichtung verwendet werden, kann der Ausgabesteuerwert als "Pumpsteuerwert" bezeichnet werden. Diese Vorgehensweise hat den Vorteil, dass die Flüssigkeitsförderung basierend auf einem einzigen Wert unterbrechungsfrei durchgeführt werden kann. Generell kann der Ausgabesteuerwert auch auf die Ansteuerung von Ventilen einer gravitativen Flüssigkeitsausgabe oder entsprechende Elemente angewandt werden.

Oftmals wird in Getränkeautomaten eine Pumpe, z. B. eine Hubkolbenpumpe, mit Pulsen betrieben, wobei die Anzahl der Pulse ein Maß für die geförderte Flüssigkeitsmenge ist. Aus einer bestimmten Anzahl von Pulsen, die der Steuerparameterwert vorgibt, würde sich bei der vorangehend geschilderten Ausführungsform durch den Kompensationswert eine geänderte Anzahl von Pulsen als Ausgabesteuerwert (Pumpsteuerwert) ergeben. Würden zuerst die durch den Steuerparameterwert vorgegebenen Pulse an die Pumpe gesendet und danach eine Anzahl von Pulsen, die durch den Kompensationswert vorgegeben sind, wären keine Korrekturen zur Reduzierung des Flüssigkeitsvolumens mehr möglich.

Bevorzugt stellt der Kompensationswert einen Faktor dar, mit dem der Steuerparameterwert multipliziert wird. Der Kompensationswert kann z. B. eine Prozentangabe sein, wobei 110% bedeutet, dass statt 50 durch den Steuerparameterwert vorgegebene Pulse 55 Pulse als Ausgabesteuerwert, z.B. zur Steuerung einer Pumpe, verwendet werden. Dies hat den Vorteil, dass die Steuerparameterwerte auf sehr einfache Weise geändert bzw. angepasst werden können bzw. ein Ausgabesteuerwert sehr einfach gebildet werden kann. Mit der Änderung der Steuerparameterwerte, z.B. den Pulsen zur Ansteuerung einer Pumpe, können die Menge der gepumpten Flüssigkeit und damit auch der ausgegebenen Flüssigkeit korrigiert und damit Mengenunterschiede kompensiert werden.

Gemäß einem bevorzugten Verfahren gibt der Steuerparameterwert eine Anzahl von Pulsen wieder, die zur Förderung des mit dem Steuerparameterwert verknüpften Flüssigkeitsvolumens an die Pumpe gesendet werden müssen.

Gemäß einem bevorzugten Verfahren ist der Getränkeautomat ein Kaffeeautomat, insbesondere ein Kaffeevollautomat, und die auswählbaren Heißgetränketypen umfassen Kaffeegetränketypen, Heißwasser, Dampf und Milch.

Gemäß einem bevorzugten Verfahren wird jeder Getränketyp zumindest durch einen Parameter zur Getränkeart und einen Parameter zum Flüssigkeitsvolumen bestimmt. Die Getränkeart kann dabei grundsätzlich verschiedene Kategorien bestimmen, z. B. Kaffee, Tee, Brühe, Milch, Kakao oder beispielsweise unterschiedliche Kaffeesorten. Die beiden Parameter werden bevorzugt zusätzlich durch mindestens einen weiteren Parameter der Gruppe Temperatur, Milchanteil, Kaffeeanteil, Verpressdruck für Getränkepulver oder Mahlgrad für Getränkepulver, jeweils insbesondere Kaffeepulver, Crema (z. B. ob vorhanden oder nicht), Flussgeschwindigkeit und Flüssigkeitsdruck ergänzt.

Gemäß einem bevorzugten Verfahren ist jeder Steuerparameterwert mit einem Flüssigkeitsvolumen verknüpft, wobei für jedes Flüssigkeitsvolumen nur ein Steuerparameterwert existiert. Der Steuerparameterwert hängt also nicht direkt vom Heißgetränketyp ab. Dies hat den besonderen Vorteil, dass im Programm des Getränkeautomaten die Flüssigkeitsförderung durch vergleichsweise wenige Steuerparameterwerte für sehr viele Getränketypen realisiert werden kann, was eine Implementierung der Steuerparameterwerte in das Programm sehr einfach und übersichtlich macht.

Die Kompensationswerte liegen bevorzugt in Form einer Kompensationsfunktion oder einer Kompensationstabelle vor. Dies ermöglicht eine einfache Implementierung und Änderung.

Die Kompensationswerte können durch individuelle Experimente festgelegt werden, was eine sehr genaue Anpassung an einzelne Heißgetränketypen ermöglicht. Sie können alternativ durch Extrapolation aus Versuchen zu anderen Getränkesorten ermittelt oder gar übernommen werden, was eine schnelle, wenn auch nicht so genaue Erzeugung der Kompensationswerte zulässt.

Ein erfindungsgemäßer Getränkeautomat zur Herstellung von Heißgetränken, welcher zur Zubereitung einer Vielzahl unterschiedlicher Heißgetränketypen ausgelegt ist, umfasst die folgenden Komponenten:
- Eine Speichereinheit umfassend Steuerparameterwerte für eine Anzahl von Flüssigkeitsvolumina, wobei jeder Steuerparameterwert mit einem Flüssigkeitsvolumen verknüpft ist.
- Eine Speichereinheit umfassend eine Anzahl von Kompensationswerten zur Änderung von Flüssigkeitsvolumina, wobei jeder Kompensationswert mit einem Heißgetränketyp verknüpft ist. Diese und die vorgenannte Speichereinheit können Speicherbereiche in einem gemeinsamen Speichermodul sein.
- Eine an sich bekannte Auswahleinheit ausgelegt zur benutzerseitigen Auswahl eines Heißgetränketyps.
- Eine Recheneinheit ausgelegt zur Berechnung von Steuerdaten zur Förderung des Flüssigkeitsvolumens aus dem Steuerparameterwert, ggf. geändert durch den Kompensationswert für den Heißgetränketyp.
- Eine Steuereinrichtung zur Steuerung einer Zubereitung eines Heißgetränks des ausgewählten Heißgetränketyps.

Bevorzugt ist der Getränkeautomat ein Kaffeevollautomat und/oder zur Ausführung eines erfindungsgemäßen Verfahrens ausgelegt.

Die Erfindung kompensiert effektiv Volumenschwankungen bei den ausgegebenen Getränken desselben Getränketyps.

Das Prinzip der Erfindung wird im Folgenden anhand einer Zeichnung beispielshalber noch näher erläutert. In der Zeichnung zeigen:
- Figur 1:: einen schematischen Aufbau eines Fluidsystems,
- Figur 2:: ein Beispiel für einen idealisierten Druck- und Flussverlauf,
- Figur 3:: ein Beispiel für einen realen Druckverlauf und die Änderung des Phasenwinkels einer Pumpe,
- Figur 4:: ein Blockschaltbild zum Ablauf eines erfindungsgemäßen Verfahrens,
- Figur 5:: ein Beispiel für einen bevorzugten Getränkeautomaten.

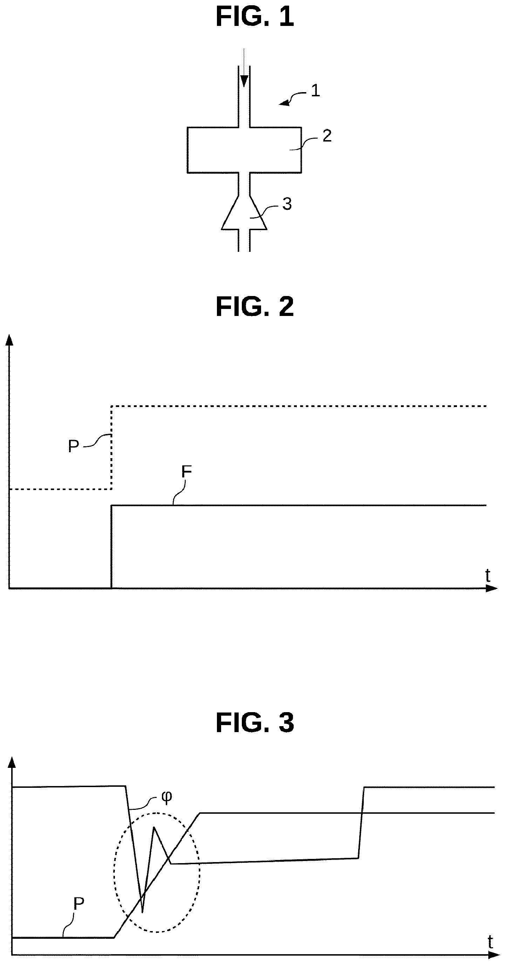

Figur 1 zeigt einen schematischen Aufbau eines Fluidsystems 1, wie es in einem typischen Kaffeevollautomaten vorhanden ist. Das Wasser für ein Kaffeegetränk tritt in Pfeilrichtung in das Fluidsystem 1 ein, passiert zunächst die Brühkammer 2, danach das Cremaventil 3 und tritt dann als Kaffeegetränk aus dem Fluidsystem 1 aus. Zumindest die Komponenten Brühkammer 2 und Cremaventil 3 setzen dem Wasserfluss einen Widerstand entgegen und es ist damit ein bestimmter Druck für den Durchfluss durch jede der beiden Komponenten aufzuwenden.

Figur 2 zeigt ein Beispiel für einen idealisierten Druck- und Flussverlauf durch ein in Figur 1 dargestelltes Fluidsystem 1. Die obere gestrichelte Kurve stellt den Druck P dar, die untere, durchgezogene Kurve den Fluss F des Wassers. In dem idealisierten Druckverlauf steigt der Druck P zu Beginn des Vorgangs sprunghaft auf einen Maximalwert an, der sich in erster Näherung aus den Teildrücken berechnet, die sich aus den entgegenstehenden Drücken bzw. fluidischen Widerständen der Brühkammer 2 und des Cremaventils 3 ergibt. Dies geht mit einer kurzen Spitze im Flussverlauf einher, wobei der Fluss F nach kurzer Zeit konstant wird. Nach einer bestimmten Zeit wird der Druck P konstant oder steigt nur noch marginal, was aus den sich ändernden Widerständen in der Brühkammer 2 und dem Cremaventil 3 resultiert.

Figur 3 zeigt ein Beispiel für einen realen Druckverlauf und die Änderung des Phasenwinkels ϕ einer Hubkolbenpumpe. Man sieht im Unterschied zu Figur 2, dass in der Realität ein langsam steigender Druckverlauf die Anfangsphase dominiert. Danach wird der Druck P nahezu konstant. Die Charakteristik des Flussmessers ist in einer Regelsoftware in der Regel auf einen konstanten Druck eingestellt. Das Fluidsystem 1 ist allerdings zumindest zu Beginn einer Brühung nicht in einer solchen Weise in der Realität abbildbar. Die dargestellte Phasenkurve der Pumpe zeigt dazu auch, dass es einen - gestrichelt eingekreisten - Bereich gibt, in dem der Phasenwinkel ϕ stark fluktuiert. Es entstehen Schwingungen im Anstiegsbereich des Drucks P durch die Pumpe, die vom Sensor nicht bemerkt werden.

Zumeist ist der Fehler, der sich aus der Abweichung zu einem idealisierten Verlauf ergibt, negativ, d. h. es wird systematisch weniger Volumen ausgeschenkt. Absolut gesehen ist der Volumenfehler von Brühung zu Brühung annähernd in der gleichen Größenordnung. Bei Kaffeegetränken mit geringem Volumen, wie z. B. Espresso, kann der Volumenfehler durchaus bei ca. -15% bis -25% liegen. Bei Getränken mit großem Volumen, wie z. B. Cappucino, kann der Volumenfehler bei ca. -3% bis -5% liegen. Beispielsweise kann ein Espresso mit 35 ml ein unkorrigiertes Tassenvolumen von ca. 24 ml erreichen und ein Cafe Crema bei 200ml ein unkorrigiertes Tassenvolumen von 192 ml. Mit dem erfindungsgemäßen Verfahren wird über die verschiedenen Füllmengen der unterschiedlichen Getränkearten der Volumenfehler systematisch optimiert.

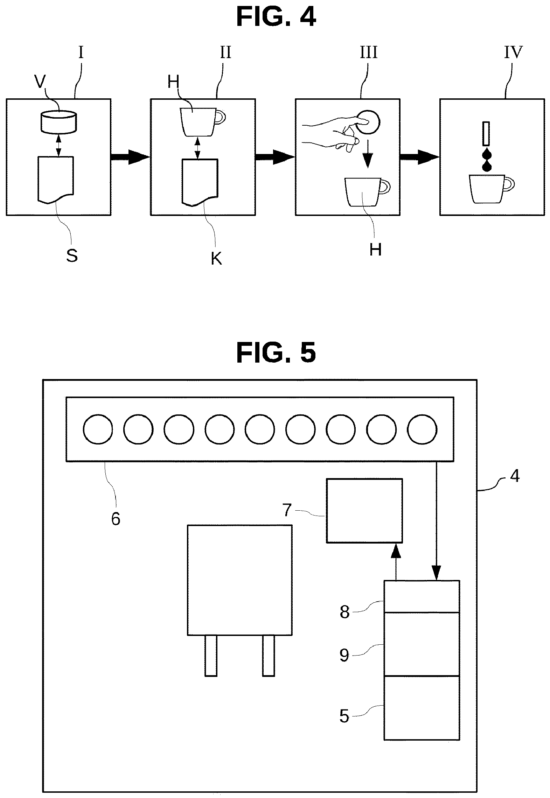

Figur 4 zeigt ein Blockschaltbild zum Ablauf eines erfindungsgemäßen Verfahrens zur Herstellung von Heißgetränken mit einem Getränkeautomaten 4 (s. dazu z. B. Figur 5), welcher zur Zubereitung einer Vielzahl unterschiedlicher Heißgetränketypen H ausgelegt ist.

In Schritt I erfolgt eine Bereitstellung von Steuerparameterwerten S für eine Anzahl von Flüssigkeitsvolumina, wobei jeder Steuerparameterwert S hier mit einem Flüssigkeitsvolumen V verknüpft ist. Bereitstellung bedeutet, dass die Steuerparameterwerte S dem Verfahren für jede Getränkezubereitung zur Verfügung stehen. Die Steuerparameterwerte S sind typischerweise konstante Werte, die z. B. in einer Speichereinheit 5 abgespeichert sind und für das Verfahren abgerufen werden können. Mit jeder Heißgetränkezubereitung wird der zur Auswahl passende Steuerparameterwert S gemäß der Auswahl abgerufen.

In Schritt II erfolgt eine Bereitstellung einer Vielzahl von Kompensationswerten K zur Änderung von Flüssigkeitsvolumina, wobei jeder Kompensationswert mit einem Heißgetränketyp H verknüpft ist. Für die Bereitstellung der Kompensationswerte K gilt entsprechendes wie oben zu der Bereitstellung der Steuerparameterwerte S erläutert.

In Schritt III erfolgt eine benutzerseitige Auswahl eines Heißgetränketyps H, z. B. mittels Wahltasten am Getränkeautomaten 4.

In Schritt IV erfolgt eine Zubereitung eines Heißgetränks des ausgewählten Heißgetränketyps H durch den Getränkeautomaten 4, wobei ein Flüssigkeitsvolumen einer Flüssigkeit durch den Getränkeautomaten 4 befördert wird, welches sich aus dem Steuerparameterwert S für das Flüssigkeitsvolumen V geändert durch den Kompensationswert K für den Heißgetränketyp H ergibt.

Figur 5 zeigt ein Beispiel für einen Getränkeautomaten in Form eines Kaffeevollautomaten 4 zur Herstellung von Heißgetränken. Der Kaffeevollautomat 4 umfasst neben anderen, zur Zubereitung von Kaffee erforderlichen Einheiten insbesondere die folgenden Komponenten:
- Eine Speichereinheit 5 umfassend Steuerparameterwerte S für eine Anzahl von Flüssigkeitsvolumina V. Dieselbe Speichereinheit 5 umfasst in einem anderen Speicherbereich eine Anzahl von Kompensationswerten K zur Änderung von Flüssigkeitsvolumina V. Zu den Verknüpfungen der Werte wird auf das vorangehende Beispiel zum Verfahren verwiesen.
- Eine Auswahleinheit 6 ausgelegt zur Auswahl eines Heißgetränketyps.
- Eine Steuereinrichtung 7 ausgelegt zur Steuerung einer Zubereitung eines Heißgetränks des ausgewählten Heißgetränketyps H durch den Kaffeevollautomaten 4.
- Eine Recheneinheit 9 ausgelegt zur Berechnung von Steuerdaten aus dem Steuerparameterwert S für das Flüssigkeitsvolumen V geändert durch den Kompensationswert K für den Heißgetränketyp H.
- Eine Datenschnittstelle 8 zur Herstellung eines Datenkontakts mit der Auswahleinheit 6. Dadurch können Daten zur Auswahl des Heißgetränketyps H an die Recheneinheit 9 weitergegeben werden. Der Pfeil von der Auswahleinheit 6 zur Datenschnittstelle 8 soll dabei die Richtung des Datenflusses andeuten. Die Datenschnittstelle 8 ist dabei auch zum Senden von Steuerdaten (zweiter Pfeil) an eine Steuereinrichtung 7 zur Steuerung einer Zubereitung eines Heißgetränks des ausgewählten Heißgetränketyps H durch den Kaffeevollautomaten 4 ausgelegt.

Da es sich bei der vorhergehenden, detailliert beschriebenen Ausführungsform um ein Beispiel handelt, kann es in üblicher Weise vom Fachmann in einem weiten Umfang modifiziert werden, ohne den Bereich der Erfindung zu verlassen. Insbesondere kann auch die Bereitstellung der Kompensationswerte in anderer Form als in der hier beschriebenen erfolgen. Ebenso kann die Anordnung der Auswahleinheit in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Fluidsystem
- 2: Brühkammer
- 3: Cremaventil
- 4: Kaffeevollautomat
- 5: Speichereinheit
- 6: Auswahleinheit
- 7: Steuereinrichtung
- 8: Datenschnittstelle
- 9: Recheneinheit

- F: Fluss
- H: Heißgetränketyp
- K: Kompensationswert
- P: Druck
- ϕ: Phasenwinkel
- S: Steuerparameterwerte
- V: Flüssigkeitsvolumen / Flüssigkeitsvolumen

## Patentansprüche

1. Verfahren zur Herstellung von Heißgetränken mit einem Getränkeautomaten (4), welcher zur Zubereitung einer Vielzahl unterschiedlicher Heißgetränketypen (H) ausgelegt ist, umfassend die Schritte:
- Bereitstellen von Steuerparameterwerten (S) für eine Anzahl von Flüssigkeitsvolumina (V), wobei jeder Steuerparameterwert (S) mit einem Flüssigkeitsvolumen (V) verknüpft ist,
- Bereitstellen einer Anzahl von Kompensationswerten (K) zur Änderung von Flüssigkeitsvolumina (V), wobei jeder Kompensationswert (K) mit einem Heißgetränketyp (H) verknüpft ist,
- Auswahl eines Heißgetränketyps (H),
- Zubereitung eines Heißgetränks des ausgewählten Heißgetränketyps (H), wobei ein Flüssigkeitsvolumen (V) befördert wird, welches sich aus dem Steuerparameterwert (S) für das Flüssigkeitsvolumen (V) geändert durch den Kompensationswert (K) für den Heißgetränketyp (H) ergibt.

2. Verfahren nach Anspruch 1, **dadurch gekennzeichnet, dass** zur Beförderung des Flüssigkeitsvolumens (V) durch den Getränkeautomaten (4) ein Ausgabesteuerwert berechnet wird, der sich aus dem Steuerparameterwert (S) und dem Kompensationswert (K) ergibt, wobei der Kompensationswert (K) bevorzugt einen Faktor darstellt, mit dem der Steuerparameterwert (S) multipliziert wird, insbesondere einen Faktor größer Eins.

3. Verfahren nach einem der vorangehenden Ansprüche, **dadurch gekennzeichnet, dass** der Steuerparameterwert (S) eine Anzahl von Pulsen wiedergibt, die zur Förderung des mit dem Steuerparameterwert (S) verknüpften Flüssigkeitsvolumens (V) an eine Pumpe gesendet werden.

4. Verfahren nach einem der vorangehenden Ansprüche, **dadurch gekennzeichnet, dass** der Getränkeautomat (4) ein Kaffeeautomat (4), insbesondere ein Kaffeevollautomat (4) ist und die auswählbaren Heißgetränketypen (H) Kaffeegetränketypen umfassen.

5. Verfahren nach einem der vorangehenden Ansprüche, **dadurch gekennzeichnet, dass** jeder Heißgetränketyp (H) durch einen Parameter zur Getränkeart und einen Parameter zum Flüssigkeitsvolumen (V) bestimmt wird und bevorzugt zusätzlich durch mindesten einen weiteren Parameter der Gruppe Temperatur, Milchanteil, Kaffeeanteil, Verpressdruck für Getränkepulver, Mahlgrad für Getränkepulver, Flussgeschwindigkeit und Flüssigkeitsdruck.

6. Verfahren nach einem der vorangehenden Ansprüche, **dadurch gekennzeichnet, dass** jeder Steuerparameterwert (S) mit einem Flüssigkeitsvolumen (V) verknüpft ist, wobei mit einem Flüssigkeitsvolumen (V) einer zu fördernden Flüssigkeit nur ein einziger Steuerparameterwert (S) verknüpft ist.

7. Verfahren nach einem der vorangehenden Ansprüche, **dadurch gekennzeichnet, dass** die Kompensationswerte (K) in Form einer Kompensationsfunktion oder einer Kompensationstabelle vorliegen.

8. Getränkeautomat (4) zur Herstellung von Heißgetränken, welcher zur Zubereitung einer Vielzahl unterschiedlicher Heißgetränketypen (H) ausgelegt ist, umfassend:
- eine Speichereinheit (5) umfassend Steuerparameterwerte (S) für eine Anzahl von Flüssigkeitsvolumina (V), wobei jeder Steuerparameterwert (S) mit einem Flüssigkeitsvolumen (V) verknüpft ist,
- eine Speichereinheit (5) umfassend eine Anzahl von Kompensationswerten (K) zur Änderung von Flüssigkeitsvolumina (V), wobei jeder Kompensationswert mit einem Heißgetränketyp (H) verknüpft ist,
- eine Auswahleinheit (6) ausgelegt zur Auswahl eines Heißgetränketyps (H),
- eine Recheneinheit (9) ausgelegt zur Berechnung von Steuerdaten aus dem Steuerparameterwert (S) für das Flüssigkeitsvolumen (V) geändert durch den Kompensationswert (K) für den Heißgetränketyp (H),
- eine Steuereinrichtung (7) zur Steuerung einer Zubereitung eines Heißgetränks des ausgewählten Heißgetränketyps (H) durch den Getränkeautomaten (4).

9. Getränkeautomat (4) nach Anspruch 8, **dadurch gekennzeichnet, dass** er zur Ausführung eines Verfahrens nach einem der Ansprüche 1 bis 7 ausgelegt ist.

10. Getränkeautomat (4) nach Anspruch 8 oder 9, **dadurch gekennzeichnet, dass** er ein Kaffeevollautomat (4) ist.

## Claims

1. Method for the production of hot drinks with a drinks machine (4), which is configured for the preparation of a plurality of different types of hot drinks (H), comprising the steps:
- providing control parameter values (S) for a number of liquid volumes (V), wherein each control parameter value (S) is linked to one liquid volume (V),
- providing a number of compensation values (K) for changing the liquid volumes (V), wherein each compensation value (K) is linked to a type of hot drink (H),
- selecting a type of hot drink (H),
- preparing a hot drink of the type of hot drink (H) selected, wherein a liquid volume (V) is conveyed, which results from the control parameter value (S) for the liquid volume (V) changed by the compensation value (K) for the type of hot drink (H).

2. Method according to claim 1, **characterised in that,** in order for the liquid volume (V) to be conveyed by the drinks machine (4), an output control value is calculated which results from the control parameter value (S) and the compensation value (K), wherein the compensation value (K) preferably represents a factor, by which the control parameter value (S) is multiplied, in particular a factor greater than one.

3. Method according to one of the preceding claims, **characterised in that** the control parameter value (S) reflects a number of pulses which are sent to a pump in order to convey the liquid volume (V) which is linked to the control parameter value (S).

4. Method according to one of the preceding claims, **characterised in that** the drinks machine (4) is a coffee machine (4), in particular a fully automatic coffee machine (4) and the types of hot drinks (H) that can be selected include types of coffee drinks.

5. Method according to one of the preceding claims, **characterised in that** each type of hot drink (H) is determined by a parameter for the kind of drink and a parameter for the liquid volume (V) and preferably, in addition, by at least one further parameter from the group consisting of temperature, amount of milk, amount of coffee, injection pressure for drinks powder, grinding rate for drinks powder, flow rate and liquid pressure.

6. Method according to one of the preceding claims, **characterised in that** each control parameter value (S) is linked to a liquid volume (V), wherein just a single control parameter value (S) is linked to a liquid volume (V) of a liquid to be conveyed.

7. Method according to one of the preceding claims, **characterised in that** the compensation values (K) are present in the form of a compensation function or a compensation table.

8. Drinks machine (4) for the production of hot drinks, which is configured for the preparation of a plurality of different types of hot drinks (H), comprising:
- a storage unit (5) comprising control parameter values (S) for a number of liquid volumes (V), wherein each control parameter value (S) is linked to a liquid volume (V),
- a storage unit (5) comprising a number of compensation values (K) for changing liquid volumes (V), wherein each compensation value is linked to a type of hot drink (H),
- a selection unit (6) configured for the selection of a type of hot drink (H),
- a computer unit (9) configured for calculating control data from the control parameter value (S) for the liquid volume (V) changed by the compensation value (K) for the type of hot drink (H),
- a control facility (7) for controlling a preparation by the drinks machine (4) of a hot drink of the type of hot drink (H) selected.

9. Drinks machine (4) according to claim 8, **characterised in that** it is configured to carry out a method according to one of claims 1 to 7.

10. Drinks machine (4) according to claim 8 or 9, **characterised in that** it is a fully automatic coffee machine (4).

## Revendications

1. Procédé de fabrication de boissons chaudes avec un automate à boisson (4), qui est conçu pour préparer une pluralité de types de boisson chaude (H) différents, comprenant les étapes suivantes :
- fourniture de valeurs de paramètre de commande (S) pour un certain nombre de volumes de liquide (V), chaque valeur de paramètre de commande (S) étant associée à un volume de liquide (V),
- fourniture d'un certain nombre de valeurs de compensation (K) pour modifier des volumes de liquide (V), chaque valeur de compensation (K) étant associée à un type de boisson chaude (H),
- sélection d'un type de boisson chaude (H),
- préparation d'une boisson chaude du type de boisson chaude sélectionné (H), dans lequel un volume de liquide (V) est acheminé, lequel résulte de la valeur de paramètre de commande (S) pour le volume de liquide (V) modifiée par la valeur de compensation (K) pour le type de boisson chaude (H).

2. Procédé selon la revendication 1, **caractérisé en ce que**, pour acheminer le volume de liquide (V) à travers l'automate à boisson (4), une valeur de commande de sortie est calculée, qui résulte de la valeur de paramètre de commande (S) et de la valeur de compensation (K), dans lequel la valeur de compensation (K) est de préférence un facteur par lequel la valeur de paramètre de commande (S) est multipliée, en particulier un facteur supérieur à un.

3. Procédé selon l'une des revendications précédentes, **caractérisé en ce que** la valeur de paramètre de commande (S) retransmet un certain nombre d'impulsions, qui sont envoyées à une pompe pour transporter le volume de liquide (V) associé à la valeur de paramètre de commande (S).

4. Procédé selon l'une des revendications précédentes, **caractérisé en ce que** l'automate à boisson (4) est une machine à café (4), en particulier une machine à café entièrement automatique (4) et les types de boisson chaude sélectionnables (H) comprennent des types de boisson à base de café.

5. Procédé selon l'une des revendications précédentes, **caractérisé en ce que** chaque type de boisson chaude (H) est déterminé par un paramètre pour la nature de la boisson et un paramètre pour le volume de liquide (V) et de préférence en plus par au moins un paramètre supplémentaire choisi dans le groupe comprenant la température, la proportion de lait, la proportion de café, la pression de pressage pour la poudre de boisson, la finesse de mouture pour la poudre de boisson, la vitesse d'écoulement et la pression du liquide.

6. Procédé selon l'une des revendications précédentes, **caractérisé en ce que** chaque valeur de paramètre de commande (S) est associée à un volume de liquide (V), et dans lequel une seule valeur de paramètre de commande (S) est associée à un volume de liquide (V) d'un liquide à acheminer.

7. Procédé selon l'une des revendications précédentes, **caractérisé en ce que** les valeurs de compensation (K) sont présentes sous forme d'une fonction de compensation ou d'une table de compensation.

8. Automate à boisson (4) pour fabriquer des boissons chaudes, qui est conçu pour préparer une pluralité de différents types de boisson chaude (H) différents, comprenant :
- une unité de mémoire (5) comprenant des valeurs de paramètre de commande (S) pour un certain nombre de volumes de liquide (V), chaque valeur de paramètre de commande (S) étant associée à un volume de liquide (V),
- une unité de mémoire (5) comprenant un certain nombre de valeurs de compensation (K) pour modifier des volumes de liquide (V), chaque valeur de compensation (K) étant associée à un type de boisson chaude (H),
- une unité de sélection (6) conçue pour sélectionner un type de boisson chaude (H),
- une unité de calcul (9) conçue pour calculer des données de commande à partir de la valeur de paramètre de commande (S) pour le volume de liquide (V) modifiée par la valeur de compensation (K) pour le type de boisson chaude (H), et
- un dispositif de commande (7) pour commander une préparation d'une boisson chaude du type de boisson chaude (H) sélectionné par l'automate à boisson (4).

9. Automate à boisson (4) selon la revendication 8, **caractérisé en ce qu'**il est conçu pour exécuter un procédé selon l'une des revendications 1 à 7.

10. Automate à boisson (4) selon la revendication 8 ou 9, **caractérisé en ce qu'**il est une machine à café entièrement automatique (4).
